# EUROPEAN PATENT APPLICATION

(11) **EP 1 826 969 A1**
(43) Date of publication of application: **29.08.2007**
(21) Application number: 04807058.5
(22) Date of filing: 15.12.2004
(51) Int. Cl.: H04L 12/66

(54) **NETWORK CONNECTION SERVICE PROVIDING DEVICE**

(71) Applicant: Suginaka, Junko, Minato-ku, Tokyo 105-0001 (JP); Negishi, Kunihiko, Tokyo 112-0012 (JP); Saito, Kazuoki, Tokyo 162-0805 (JP); Fujino, Shigeru, Tokyo 156-0053 (JP)
(72) Inventor: Suginaka, Junko, Minato-ku, Tokyo 105-0001 (JP); Negishi, Kunihiko, Tokyo 112-0012 (JP); Saito, Kazuoki, Tokyo 162-0805 (JP); Fujino, Shigeru, Tokyo 156-0053 (JP)
(74) Representative: Appelt, Christian W.
(86) International application number: PCT/JP2004/018699
(87) International publication number: WO 2006/064552

(57) **Abstract**

The present invention aims to provide a network connection service providing device capable of making not only a connection to the Internet, but also, if necessary, a connection to a private network, by a so-called hotspot service for providing a network connection service wirelessly at a station, an airport, a shop, or the like, and a control unit 2 relays, when the destination address of an access request sent from a communication terminal 10 is a specific address registered in advance in a specific address table 3, the access request destined to the specific address to a private network 20 other than an Internet 30, and relays, when the destination address of an access request sent from the communication terminal 10 is not the specific address, the access request to the Internet 30.

## Description

### TECHNICAL FIELD

The present invention relates to a network connection service providing device that allows using the Internet by safely communicating personal information and the like.

### BACKGROUND ART

A so-called hotspot service system has been known, for which an access point for wireless communication is installed at a station, an airport, a shop, or the like so as to allow connecting to the Internet wirelessly by use of a portable personal computer, a personal digital assistant, or the like (see Patent Documents 1 and 2, for example).
[Patent Document 1] Japanese Unexamined Patent Application Publication No. 2003-218861
[Patent Document 2] Japanese Unexamined Patent Application Publication No. 2004-236064

### DISCLOSURE OF THE INVENTION

### PROBLEMS TO BE SOLVED BY THE INVENTION

However, the so-called hotspot service provides only connection services to the Internet. In a case of communicating over the Internet, there is a danger of sniffing, tampering, and spoofing. For this reason, some users are hesitant to use important services such as electronic settlement over the Internet.

The present invention has been made in view of such circumstances, and it is an object thereof to provide a network connection service providing device capable making of not only a connection to the Internet, but also, if necessary, a connection to a safer private network.

### MEANS FOR SOLVING THE PROBLEMS

A network connection service providing device of the present invention comprising: a specific address table in which an address of a server connected to a private network other than an Internet is registered; an authentication table in which authority to use the private network is registered; and a control means that receives an access request which is destined to the address registered in the specific address table and whose using authority is registered in the authentication table and relays the access request to the private network and that receives an access request destined to the address not registered in the specific address table and relays the access request to the Internet

In addition, by further comprising: a wireless gateway means that wirelessly receives the access request and transfers the access request to the control means; and a router that connects the control means with the private network and the Internet, private network services can be provided at a so-called hotspot.

In addition, the router receives the access request from the Internet which is destined to the address registered in the specific address table and whose using authority is registered in the authentication table and relays the access request to the private network, and receives the access request from the private network which is destined to the address not registered in the specific address table and relays the access request to the Internet, whereby communication can be carried out between a server connected to the private network and a server connected to the Internet.

### EFFECTS OF THE INVENTION

According to the present invention, not only a connection to the Internet but also, if necessary, a connection to a safer private network can be carried out at a so-called hotspot or the like. This allows communicating personal information with security and also allows using the Internet.

### BRIEF DESCRIPTION OF THE DRAWINGS

Fig. 1 is a block diagram showing a configuration of a network connection service providing device according to Embodiment 1 of the present invention.
Fig. 2 is a block diagram showing a configuration of a network connection service providing device according to Embodiment 2 of the present invention.

### DESCRIPTION OF REFERENCE SIGNS

1 Wireless gateway unit
2 Control unit
3 Specific address table
4 Authentication table
5 Router
10 Communication terminal
11 Control unit
12 Specific address table
13 Authentication table
20 Private network
30 Internet
40 Financial institution server
50 Contents provider server
60 Wireless gateway unit
100 Network connection service providing device
200 Network connection service providing device

### BEST MODE FOR CARRYING OUT THE INVENTION

Hereinafter, the best mode for carrying out the present invention will be described in detail with reference to the accompanying drawings.

### EXAMPLE 1

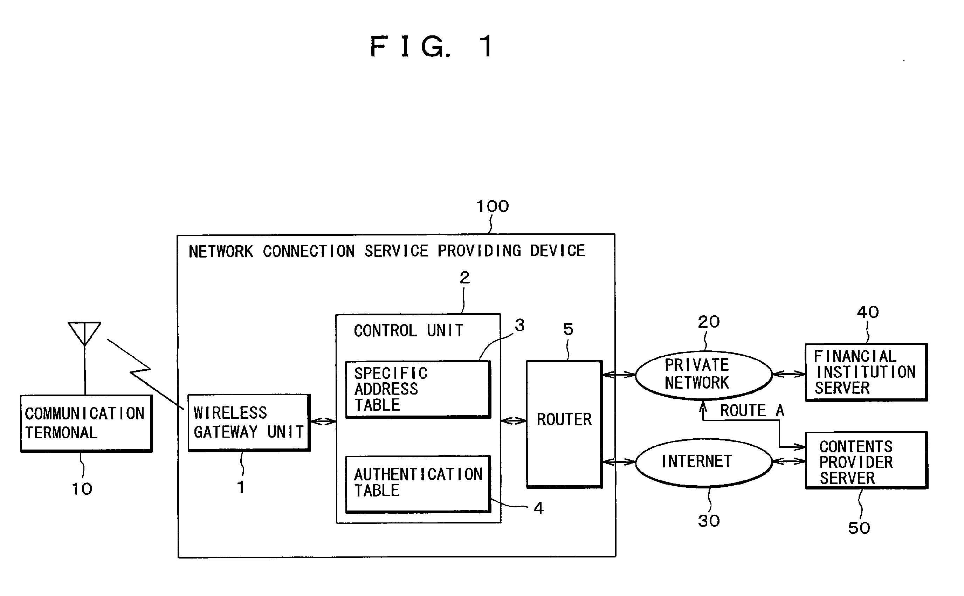

Fig. 1 is a block diagram showing a configuration of a network connection service providing device according to Embodiment 1 of the present invention. A network connection service providing device 100 is equivalent to, for example, a hotspot service providing device, and includes a wireless gateway unit 1, a control unit 2, and a router 5. The control unit 2 includes a specific address table 3 and an authentication table 4 . The wireless gateway unit 1 receives an access request to a predetermined address from a communication terminal 10, and the control unit 2 judges whether the address is a specific address present in the specific address table 3. In the specific address table 3, registered in advance are addresses accessible via a private network 20. When a destination address is not a specific address, the communication terminal 10 is made to access, for example, a contents provider server 50 via the router 5 and normal Internet 30. When the destination address is the specific address, when it is further authenticated that a user has qualified to receive a specific service as a result of a comparison with each user's ID and password registered in the authentication table 4, the control unit 2 relays the access request to the router 5 and the private network 20 and makes the communication terminal 10 carry out communication handling personal information with a financial institution server 40 or the like. The private network 20 is a network using a communication protocol and address system identical to that of the Internet 30 and independent of the Internet 30. Therefore, it is considerably difficult for a malicious third party to access the private network 20 via the Internet 30, so that the user can communicate personal information via the private network 20 with security. Since the private network 20 only handles a small capacity of data such as personal information, this can be realized by a small-scale facility. The control unit 2 does not permit communicationwhen the destination address is the specific address and the authorization could not be obtained.

For example, it is supposed that a financial institution server 40 for an electronic settlement has been installed on the private network 20, the address of the financial institution server 40 has been installed in the specific address table 3, and a browser program has been installed in the communication terminal 10. When this browser program intends to access the financial institution server 40 for an electronic settlement, packets destined to the financial institution server 40 are sent from the communication terminal 10, and since the destination of the packets has been registered in the specific address table 3, the packets are relayed to the private network 20 via the router 5. When the transaction for an electronic settlement between the communication terminal 10 and the financial institution server 40 has been successfully completed, the financial institution server 40 informs the contents provider server 50 of the fact, and when the browser of the communication terminal 10 accesses the contents provider server 50, a large capacity of services can be received via the Internet 30 from the contents provider server 50. In this case, the router 5 can relay the packets without particular authentication. Conversely, a packet transmission from the contents provider server 50 to the financial institution server 40 is carried out from the Internet 30 via the router 5 and the private network 20. In this case, in order to secure security of the private network 20, the router 5 relays the packets to the private network 20 only when it has been authenticated by the control unit 2 that the packets have qualified to access the private network 20. In addition, when the contents provider server 50 is secure, by providing a configuration (route A) from directly connecting from the contents provider server 50 to the private network 20, packets may be transmitted and received between the financial institution server 40 and the contents provider server 50 via the private network 20.

### EXAMPLE 2

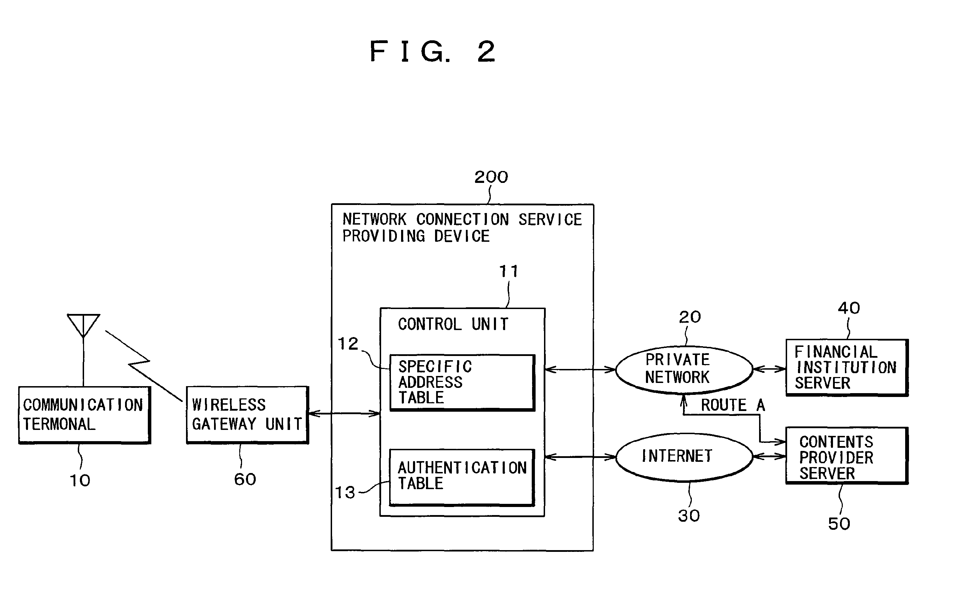

Fig. 2 is a block diagram showing a configuration of a network connection service providing device according to Embodiment 2 of the present invention. A network connection service providing device 200 is equivalent to, for example, an ISP (Internet Services Provider), and consists of a control unit 11 having a specific address table 12 and an authentication table 13. Separately therefrom, provided is a wireless gateway unit 60 equivalent to a hotspot service providing device. A communication terminal 10, a private network 20, an Internet 30, a financial institution server 40, and a contents provider server 50 are identical to those of Embodiment 1.

The network connection service providing device 200 receives, from the wireless gateway unit 60 that receives an access request to a predetermined address from the communication terminal 10, the access request and relays the access request to the private network 20 and the Internet 30.

In the present Embodiment 2, the ISP provides private network services. In the present Embodiments 2 as well, the financial institution server 40 and the contents provider server 50 can transmit and receive packets for communication, indirectly via the network connection service providing device 200 or directly via the private network 20 (route A).

However, the present invention is not limited to the abovementioned embodiments.

All publications, patents, and patent applications cited herein are hereby incorporated by reference in their entirety.

## Claims

1. A network connection service providing device comprising:
a specific address table in which an address of a server connected to a private network other than an Internet is registered;
an authentication table in which authority to use said private network is registered; and
a control means that receives an access request which is destined to the address registered in said specific address table and whose using authority is registered in said authentication table and relays the access request to said private network and that receives an access request destined to the address not registered in said specific address table and relays the access request to the Internet.

2. The network connection service providing device according to Claim 1, further comprising:
a wireless gateway means that wirelessly receives the access request and transfers the access request to said control means; and
a router that connects said control means with said private network and the Internet.

3. The network connection service providing device according to Claim 2, wherein
said router receives the access request from the Internet which is destined to the address registered in said specific address table and whose using authority is registered in said authentication table and relays the access request to said private network, and receives the access request from said private network which is destined to the address not registered in said specific address table and relays the access request to the Internet.
